# EUROPEAN PATENT APPLICATION

(11) **EP 3 828 805 A1**
(43) Date of publication of application: **02.06.2021**
(21) Application number: 20209403.3
(22) Date of filing: 24.11.2020
(51) Int. Cl.: G06Q 40/00, G06Q 50/26, G06Q 20/40, G06K 9/00

(54) **FRICTIONLESS FRAUD IDENTIFICATION AND TRACKING**

(30) Priority: 26.11.2019 US 201916696837
(71) Applicant: NCR Corporation, Atlanta, GA 30308-1007 (US)
(72) Inventor: KHAN, Sudip Rahman, Decatur, GA 30032 (US); BURRIS, Matthew Robert, Atlanta, GA 30310 (US); COSTELLO, Christopher John, Suwanee, GA 30024 (US); HARTL, Gregory Joseph, Atlanta, GA 30316 (US)
(74) Representative: Secerna LLP

(57) **Abstract**

A user is identified within an establishment. An identity associated with an account of the user with the establishment is determined. Various transactions of the user are monitored. Moreover, actions and behaviors of the user are monitored through video. A current perceived state of the user is calculated based on the monitoring of the various transactions, actions, and behaviors. The state is compared to a threshold value and a response action is automatically processed based on one or more rules. In an embodiment, custom logs are retained for a period of time that the user was in the establishment and custom aggregations of the logs are sent to one or more external systems.

## Description

Because of concerns associated with funding terrorism, The United States and other governments around the world instituted a number of laws that require financial institutions to maintain certain types of information regarding each account holder of the institutions. In the United States regulations were promulgated following the passage of the Patriot Act, commonly known as "Know Your Customer" (KYC).

KYC requires due diligence by financial institutions when opening accounts and when performing financial transactions on behalf of account holders. KYC also requires that the financial institutions maintain information about account holders and their transactions and report account activity violations. Account holders with a higher risk, have to undergo a greater degree of due diligence by the financial institutions.

Furthermore, international financial institutions must follow the laws and regulations with respect to several different governments and different governmental agencies. The types of information that must be collected, maintained, and analyzed for compliance by the financial institutions has created substantial burdens associated with staff training, hiring compliance staff, maintaining processes, maintaining procedures, *etc.* However, these are laws and regulations which financial institutions want to adhere to, and they want to help with as best as the can because the laws and regulations are directed to detecting fraud, identity theft, terrorism financing, and money laundering; any one of which can expose the financial institutions to loses and/or liabilities.

Unfortunately, one financial institution may identify a fraudulent customer and/or transaction but have no real capability of timely communicating relevant information regarding that fraud to other financial institutions and/or governmental agencies. As a result, perpetrators of frauds often go unprosecuted and the perpetrators are able to re-perpetrate a fraud with a different financial institution.

So, not only is recording and reporting requirements laborious to the financial institutions but any detected fraud is incapable of being timely disseminated so as to limit a recurring fraud and so as to bring perpetrators to justice.

In various embodiments, methods and a system for frictionless fraud identification and tracking are provided.

According to an aspect, a method for frictionless fraud identification and tracking is presented. An identity for an individual within an establishment is obtained. Various transactions, actions, and behaviors associated with the individual within the establishment are monitored and tracked. An intervention score for the individual is maintained during the monitoring of the various transactions, actions, and behaviors. A response action is processed based at least in part on the intervention score.

In an embodiment, the logs are logs/data stores 160.

These and other aspects of the present invention will be apparent from the following specific description, given by way of example, with reference to the accompanying drawings, in which:
FIG. 1 is a diagram of a system for frictionless fraud identification and tracking, according to an example embodiment.
FIG. 2 is a diagram of a method for frictionless fraud identification and tracking, according to an example embodiment.
FIG. 3 is a diagram of another method for frictionless fraud identification and tracking, according to an example embodiment.
FIG. 4 is a diagram of another system for frictionless fraud identification and tracking, according to an example embodiment.

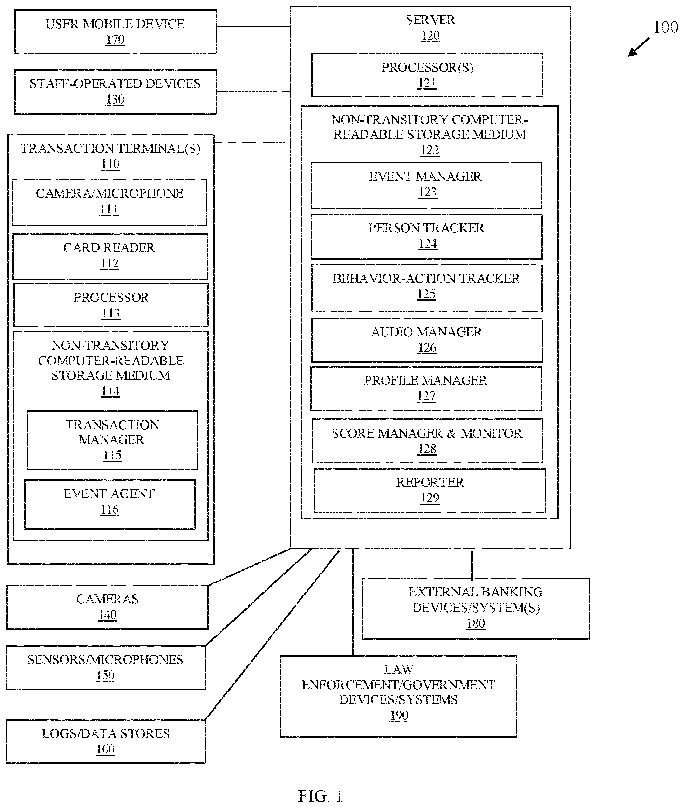

FIG. 1 is a diagram of a system 100 for frictionless fraud identification and tracking, according to an example embodiment. It is to be noted that the components are shown schematically in greatly simplified form, with only those components relevant to understanding of the embodiments being illustrated.

Furthermore, the various components (that are identified in the FIG. 1) are illustrated and the arrangement of the components is presented for purposes of illustration only. It is to be noted that other arrangements with more or with less components are possible without departing from the teachings of frictionless fraud identification and tracking, presented herein and below.

As used herein and below, the terms "user," "consumer," "user," "customer," and "account holder" may be used interchangeably and synonymously. The terms refer to an individual that is engaged in a transaction with a financial institution or present at a financial institution site where a transaction takes place or no transaction ultimately takes place, as discussed herein and below.

System 100 includes a plurality of processing devices and device types 110-190. The system 100 includes transaction terminal(s) 110, server 120, staff-operated devices 130, cameras 140, sensors/microphones 150, logs/data stores 160, user mobile devices 170, external banking devices/systems 180, and law enforcement/government devices/systems 190. Transaction terminal 110 includes a camera 111, a card reader 112, a processor 113, non-transitory computer-readable storage media 114 having executable instructions representing transaction manager 115 and event agent 116. The executable instructions when executed by processor 113 from non-transitory computer-readable storage media 114 cause processor 113 to perform the processing discussed below with respect to transaction manager 115 and event agent 116.

The server 120 includes processor(s) 121 and non-transitory computer-readable storage media 122 having executable instructions representing an event manager 123, a person tracker 124, a behavior-action tracker 125, an audio manager 126, a profile manager 127, a score manager and monitor 128, and a reporter 129. The executable instructions when executed by processor 121 from non-transitory computer-readable storage media 122 cause processor 121 to perform the processing discussed below with respect to 123-129.

The staff-operated devices 130 also include a processor, non-transitory computer-readable storage media having executable instructions representing an Application Programming Interface (API) for interacting with server 120.

User mobile devices 170 include a processor, non-transitory computer-readable storage media having executable instructions representing a mobile application. The mobile application minimally reports a device identifier for the corresponding mobile device 170 and a device location (using location services of device 170) to server 120.

It is to be noted that there may be multiple servers 120, such that the different elements 123-129 may execute on a same server 120 or multiple different servers 120 networked together. Furthermore, the server 120 may be a Local Area Network (LAN)-based server 120 or a Wide-Area Network (WAN)-based server 120.

In an embodiment, server 120 is part of a cloud-processing environment that includes a plurality of servers logically cooperating of a network as a single accessible server 120.

When an individual enters an establishment (e.g., a financial institution, such as a bank) an event is raised by event manager 123. The event may be generated and detected by event manager 123 in a variety of manners. For example, person tracker 124 by identify from frames of video captured by cameras 140 that a person has entered the establishment. In another case, the individual may have a mobile device 170 that includes a mobile application associated the establishment. The individual may interact with a user-facing interface of mobile application to indicate that the individual is checking into the establishment (through scanning of a code or through manual selection). Alternatively, mobile application may use location services of mobile device 170 to report a location for mobile device 170 that event manager 123 determines to be geofenced within or at an establishment location for the establishment. In still another case, the individual may have initiated a transaction on transaction terminal 110. Images of the individual may be captured by camera 111 and/or the individual may insert a payment/bank card into card reader 112. Transaction manager 115 utilizes card information to identify the individual. The identity or user identifier for the individual reported by event agent 116 to event manager 123. Image of the individual may also be relayed by event manager 116 to person tracker 125. In yet another case, the individual may have engaged staff at a staff-operated device 130. Information entered by the staff causes and event to be sent to event manager 123 where the individual is identified as being located within the establishment.

One the individual is identified as being present within the establishment through an event raised by event manager 123. The individual is identified as a particular customer in a variety of manners. Any transaction initiated by the customer may include a customer identifier based on card data read by card reader 112 and reported by event agent 116. Person tracker 124 may derive biometric facial features from images supplied by cameras 140 or camera 111. Person tracker 124 may compute/hash a unique biometric value from the derived biometric features and match the unique biometric value to a specific customer of the establishment. Staff entered information for a transaction initiated for the customer may include customer account information that maps to a specific customer identifier. Microphones 150 or 111 may provide audio for a speech or spoken words of the customer, which audio manager 126 computes a voice print on that maps to a voice print of a known customer of the establishment. Event manager 123 may provide a unique identity for the customer to 124 based on information provided by event agent 116, mobile device 170, or staff operated device 130.

In some cases, the individual may not be a customer of the establishment and is using the establishment to conduct a transaction. In such a case, camera 111 and/or camera 140 my provided image frames of video that person tracker 124 uses to derive biometric features and assign a unique hash value to the individual. This may be similarly done on words spoken by the individual as captured by microphones 150 or 111 and processed for a unique voice print by audio manager 126. If the individual provides card data at terminal 110 or to staff at device 130, then a name may be linked to the individual with the unique identifier.

Once a unique identifier for the individual is resolved either to a customer account of the establishment or to unique biometric features from facial images of voice patterns, person tracker 124 and behavior-action tracker 125 begin tracking the individual from the video frames provided by cameras 140 and/or 111. A bounding box within the pixels of the frames that surrounds the individual is maintained by person tracker 124. Behavior-action tracker 125 uses the bounding box to identify facial features, expressions, and extremities of the individual. Behavior-action tracker 125 also looks for predefined actions of behaviors predefined and associated with nervousness, sweating, agitation, *etc.* Simultaneously, audio manager 126 may listen for voice patterns indicating stress as received from audio from microphones 150 and/or 111.

Each behavior and action (can be video-based behavior or audio-based behavior) is assigned an identifier. Behavior-action tracker 125 supplies behavior and action identifiers to score manager and monitor 128. Simultaneously, event agent 116 and/or an agent on devices 130 sends transaction information for any transaction being performed by the individual to score manager and monitor 128.

Score manager and monitor 128 uses rules to assign the behaviors and actions to numeric values. The rules may indicate that when pairs of behaviors and/or actions are present that the values should be enhanced or weighted more heavily. Additionally, transaction information is assigned values based on a type of transaction associated with the transaction information, any amounts associated with the transaction as identified in the transaction information, and accounts used with the transaction information. Pairings of behaviors with transaction amounts above a threshold may be identified in the rules as receiving a higher weighted value.

The values are weighed in accordance with the rules, and score manager and monitor 128 computes a current state score or interaction score associated with the individual. The score manager and monitor 128 is continuously revising and changing the state score while the individual transacts and traverses (travels within) the establishment. At any given point in time, then-existing state score for the individual is available to score manager and monitor 128.

Some rules identify specific stressors visually noticed based on combinations of behavior and/or action identifiers. Other rules assign values to the combinations or a weighted value. The score manager and monitor 128 can generate the current perceived state of the individual based on: a summed average of non-linear weighted responses for each stressor; a threshold set of each stress indicator or trigger a level of response; pairs or sets of stress indicators that are given a greater response weight when seen together; or based on a provided score from a trained machine-learning algorithm that is supplied the action identifiers, behavior identifiers, and transaction information as input.

Reporter 129 receives the current perceived state score generated by score manager and monitor 128 and uses another set of rules to determine what response is needed by the establishment by comparing the scores and transaction information (if any) against conditions and thresholds defined in the response rules. When a given condition is evaluated to true, reporter 129 process one or more response actions defined for the condition that evaluated to true. These processing response actions can be customized within the response rules and can include: 1) triggering a Suspicious Activity Report with relevant details provided from the video, action identifiers, behavior identifiers, biometric features, any customer account, transaction information, *etc.;* 2) flag an account associated with the individual to require greater level of customer identification than what would normally be required for any subsequent transaction or for a current transaction being processed at terminal 110 or device 130; 3) pause or delay and flag a current ongoing transaction occurring at terminal 110 or device 130 for further manual review by staff of the establishment; and/or 4) flag the account identified in the transaction information for a deeper review by automated fraud systems or staff of the establishment.

In an embodiment, a cumulative KYC score may be generated and maintained for the individual over multiple transactions and multiple visits of the individual to the establishment or branches of the establishment. This may be used by profile manager 127 to create a trend in behaviors and actions of the individual and a behavior and transaction history for the individual. The KYC score may be shared in accordance with laws and regulations across multiple different establishments and types of establishments.

Additionally, detailed audit data for each visit by an individual may be retained in logs/data stores 160 by reporter 129. Such logs may include, by way of example only, 1) full unfiltered video and/or audio captured for the individual during each visit to the establishment; 2) wireless identifiers associated with mobile devices 170 of the individual; 3) transaction logs for the transactions processed or attempted by the individual during each visit to the establishment; 4) factors processed by system 100 for confidence levels on uniquely identifying the individual, fraud/deception, threat indicators, emotional state, and stress indicators; 5) user identification and authentication technique and factors used; 6) account identifiers for accounts that the individual used with the transactions; and/o 7) details about each establishment visited by the individual.

When reporter 129 identifies a current perceived state and transaction information that indicates fraud, a threat (violence or aggression), or identity impersonation, rules may be processed by reporter 129 to share profile information about the individual in real time or near real time to other branches of the establishment, external banking devices/systems 180, and/or law enforcement/government devices/systems 190. A full profile may be shared on the individual that enables rapid identification and alerting is pushed to support branch operations within the bank's network. The profile includes a privacy-controlled fraud/threat profile that is compiled to allow rapid identification of potential fraud and security threats for other banks using a frictionless operations platform. For example, a biometric facial identity hash can be provided, versus the full video which can be used to determine an individual's identity vs confirmation of the same individual. A law enforcement data set is compiled and provided through secure means to device/system 190. Aspects of the data may be controlled and require specific action on the part of law enforcement to gain full access to the records of logs 160. In an embodiment, the video image frames of the individual and incident may be sent for human review, labeling, and classification, to further enhance the detection, recognition, and identification of signs of threats and fraud. Sharing of the logs 160 and different levels of derived profiles may be determined based on policies that reflect laws and regulations of the country associated with the establishment.

In an embodiment, the logs 160 may be used to train machine-learning fraud and threat systems in manners that are specific to an individual using the video associated with that individual and/or audio captured for the individual. This allows for more accurate machine-learning detection algorithms that can be specific to different types of fraud, theft, impersonation, or threat.

One now appreciates how system 100 provides frictionless fully automated without any user input) fraud/threat identification, monitoring, and report processing. A complete 360-degree view of each visit of an individual is captured, behaviors, actions, and transaction specifics for the individual are noted and derived from transactions, video, and/or audio. A rules-based approach scores the individual throughout the visit within a given establishment and any threat or fraud detected is immediately and automatically addressed through response actions. Profiles are derived from the audit logs and different levels of aggregations and customizations may be shared in accordance with laws and regulations.

In an embodiment, the logs 160 are processed to supply governmental compliance reporting for KYC regulations.

In an embodiment, a current aggregated state score is maintained for a given individual as a KYC score.

In an embodiment, the KYC score is shared across branches of a single bank and across different banks.

In an embodiment, the mobile devices 170 comprise: a phone, a laptop, a wearable processing device, and/or a tablet.

In an embodiment, staff-operated devices 130 comprise: a transaction terminal 110 being operated by staff of the establishment, a phone, a laptop, a wearable processing device, a tablet, and/or a desktop computer.

In an embodiment, transaction terminals 110 comprise: an Automated Teller Machine (ATM), a Point-Of-Sale (POS) terminal, and a kiosk.

In an embodiment, sensors/microphones 150 further include speakers, motion sensors, temperature sensors, touch sensors, sound sensors, *etc.*

In an embodiment, the system 100 includes an object tracker that evaluates the pixels from the video frames to identify predefined objects viewed as threats, such as weaponry. The object tracker generates an action identifier that instructs the score manager and monitor 128 to enhance the current state score for the individual, which causes reporter to issue a silent alarm and notify staff devices 130 of the threat.

It is noted that system 100 may be used to track fraud, threats (physical or financial), and/or theft and automatically perform responsive actions based thereon and real-time reporting and notification.

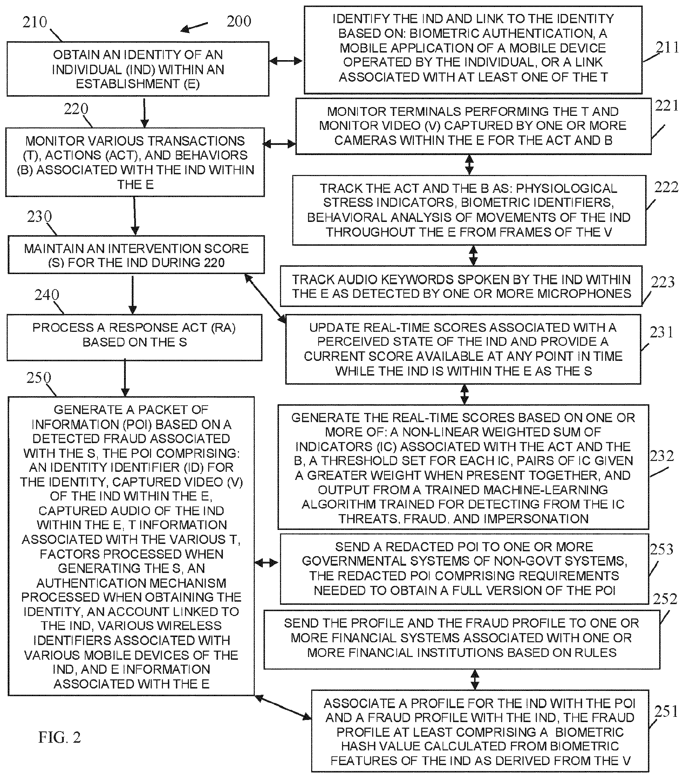

These and other embodiments are now discussed with reference to the FIGS. 2-4.

FIG. 2 is a diagram of a method 200 for frictionless fraud identification and tracking, according to an example embodiment. The software module(s) that implements the method 200 is referred to as a "fraud monitor." The fraud monitor is implemented as executable instructions programmed and residing within memory and/or a non-transitory computer-readable (processor-readable) storage medium and executed by one or more processors of a device. The processor(s) of the device that executes the fraud monitor are specifically configured and programmed to process the fraud monitor. The fraud monitor may have access to one or more network connections during its processing. The network connections can be wired, wireless, or a combination of wired and wireless.

In an embodiment, the device that executes the fraud monitor is the server 120. In an embodiment, the server 120 is a cloud-based processing environment comprising a collection of physical servers cooperating as a single logical server. In an embodiment, the server 120 is a Local-Area Network (LAN)-based server or a Wide-Area Network (WAN)-based server.

In an embodiment, the fraud monitor is all or some combination of 123, 124, 125, 126, 127, 128, and/or 129.

At 210, the fraud monitor obtains an identity of an individual within an establishment. The identity may be based on unique biometric features assigned to an unknown person but unique to that person or based on a known person and unique to that person through biometric features and/or known account information.

In an embodiment, at 211, the fraud monitor identifies the individual and links the identity based on: biometric authentication, a mobile application of a mobile device that checks-in to the establishment through operation of the individual or automated location reporting, and/or a link associated with at least one transaction within the establishment that includes information permitting the identity to be identified.

At 220, the fraud monitor monitors various transactions, actions, and behaviors associated with the individual while the individual is within the establishment.

In an embodiment, at 221, the fraud monitor monitors terminals performing the transactions and monitors video captured by one or more cameras within the establishment for the actions and behaviors.

In an embodiment of 221 and at 222, the fraud monitor tracks the actions and the behaviors as: physiological stress indicators, biometric identifiers, behavioral analysis of movements of the individual through the establishment from image frames of the video.

In an embodiment of 222 and at 223, the fraud monitor tracks audio keywords spoken by the individual within the establishment as detected by one or more microphones within the establishment.

At 230, the fraud monitor maintains an intervention score for the individual during the monitoring of 220.

In an embodiment, at 231, the fraud monitor updates real-time scores associated with a perceived state of the individual and provides a current score available at any point in time while the individual is within the establishment as the intervention score.

In an embodiment of 231 and at 232, the fraud monitor generates the real-time scores based on one or more of: non-linear weighted sum of indicators associated with the actions and behaviors of the individual, a threshold set for each indicator, pairs of indicators given a greater weight when present together, and output from a trained machine-learning algorithm trained for detecting from the indicators threats (aggression, violence), fraud, and impersonation activities associated with the individual.

At 240, the fraud monitor processes a response action based on the intervention score. The response action is identified based on rules associated with the intervention score.

In an embodiment, at 250, the fraud monitor generates a packet of information based on a detected fraud/threat associated with the intervention score. The packet of information comprising: 1) an identity identifier for the identity; 2) captured video of the individual within the establishment; 3) captured audio of the individual within the establishment; 4) transaction information associated with the various transactions; 5) factors processed when generating the intervention score; 6) an authentication mechanism processed when obtaining the identity at 210; 7) an account linked to the individual; 8) various wireless identifiers associated with mobile devices of the individual; 9) and establishment information associated with the establishment.

In an embodiment, at 251, the fraud monitor associates a profile for the individual with the packet of information and a fraud profile for the individual. The fraud profile at least comprising a biometric hash value calculated from biometric features of the individual as derived from the video.

In an embodiment, at 252, the fraud monitor sends the profile and the fraud profile to one or more financial systems associated with one or more financial institutions based on rules.

In an embodiment of 250, at 253, the fraud monitor sends a redacted packet of information to one or more governmental/law enforcement systems and/or one or more non-governmental systems. The redacted packet of information comprising requirements needed to obtain a full version of the packet of information.

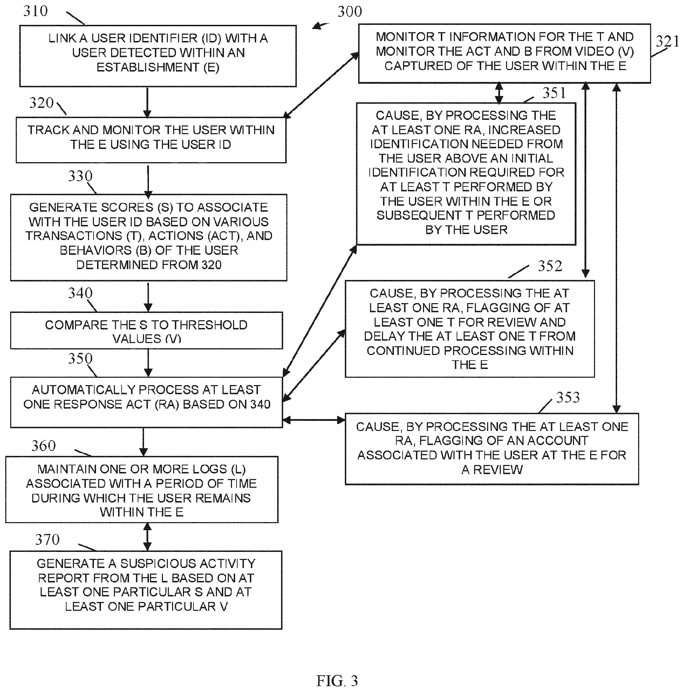

FIG. 3 is a diagram of another method 300 for transaction terminal fraud detection, according to an example embodiment. The software module(s) that implements the method 300 is referred to as a "fraud response manager." The fraud response manager is implemented as executable instructions programmed and residing within memory and/or a non-transitory computer-readable (processor-readable) storage medium and executed by one or more processors of a device. The processors that execute the transaction fraud response manager are specifically configured and programmed to process the fraud response manager detector. The fraud response manager may have access to one or more network connections during its processing. The network connections can be wired, wireless, or a combination of wired and wireless.

In an embodiment, the device that execute the fraud response manager is the server 120. In an embodiment, the server 120 is a cloud processing environment, a LAN server, or a WAN server.

In an embodiment, the fraud response manager is all of, or some combination of: 123, 124, 125, 126, 127, 128, 129, and/or the method 200.

The fraud response manager presents another and, in some ways, enhanced processing perspective of the method 200.

At 310, the fraud response manager links a user identifier with a user detected within an establishment.

At 320, the fraud response manager tracks and monitors the user within the establishment using the user identifier.

In an embodiment, at 321, the fraud response manager monitors transaction information for one or more transactions being conducted by the user within the establishment, and the fraud response manager monitors actions and behaviors of the user captured from video within the establishment.

At 330, the fraud response manager generates scores to associated with the user identifier based on various transaction, actions, and behaviors of the user as determined from 320.

At 340, the fraud response manager compares the scores to threshold values.

At 350, the fraud response manager automatically processes at least one response action based on 340.

In an embodiment of 321 and 350, at 351, the fraud response manager causes, by processing the response action, increased identification that is needed from the user above an initial identification required for at least one transaction performed by the user within the establishment or subsequent transaction performed by the user.

In an embodiment of 321 and 350, at 352, the fraud response manager causes, by processing the response action, flagging of at least one transaction for review and delays the transaction from continued processing within the establishment during the review.

In an embodiment of 321 and 350, at 353, the fraud response manager causes, by processing the response action, flagging of an account associated with the user at the establishment for review.

In an embodiment, at 360, the fraud response manager maintains one or more logs associated with a period of time during which the user remains within the establishment.

In an embodiment of 360 and at 370, the fraud response manager generates a suspicious activity report from the logs based on at least one particular score and at least one particular threshold value associated with a threat, theft, and/or fraud.

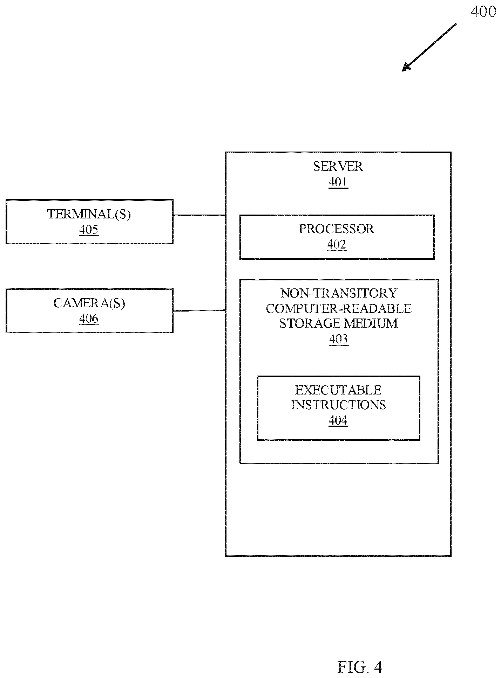

FIG. 4 is a diagram of a system 400 for frictionless fraud identification and tracking, according to an example embodiment. The system 400 includes a variety of hardware components and software components. The software components of the system 400 are programmed and reside within memory and/or a non-transitory computer-readable medium and execute on one or more processors of the terminal 400. The system 400 communicates over one or more networks, which can be wired, wireless, or a combination of wired and wireless.

In an embodiment, the system 400 implements, *inter alia,* in the processing described above with the FIGS. 1-3.

The system 400 includes: a server 401, one or more terminals 405, and one or more cameras 406. The server 401 comprising: a processor 402, and a non-transitory computer-readable medium 403 comprising executable instructions 404.

The executable instructions 404 when executed by the processor 402 from the non-transitory computer-readable storage medium 403 cause the processor 402 to perform processing comprising: 1) identifying a user within an establishment; 2) monitoring various transactions based on transaction information provided by the terminals 405; 3) monitoring actions and behaviors of the user from video captured by the cameras 406 of the user within the establishment; 4) generating a current state score for the user based on the monitoring of the transaction information, the actions, and the behaviors; and 5) processing at least one response action based on the current state score and intervention rules.

The executable instructions 404 when executed by the processor 402 from the non-transitory computer-readable storage medium 403 further cause the processor 402 to perform additional processing comprising: 6) maintaining a plurality logs of various levels of detail for a period of time that the user was in the establishment; 7) generating custom aggregations from the plurality of logs; and 8) sending the custom aggregations to a plurality of external systems.

In an embodiment, the terminals 405 include one or more of: an ATM, an SST, a kiosk, a POS terminal, a desktop operated by staff of the establishment, and/or a tablet operated by staff of the establishment.

In an embodiment, the terminals 405 include staff-operated devices 130 and transaction terminals 110.

In an embodiment, the executable instructions is all of, or some combination of: 123, 124, 125, 126, 127, 128, 129, method 200, and/or method 300.

In an embodiment, the external systems include external banking devices/systems 180 and/or law enforcement/government devices/systems 190.

Example 1, according to the present disclosure, the first aspect is provided a method, comprising:
1. obtaining an identity for an individual within an establishment;
2. monitoring various transactions, actions, and behaviors associated with the individual within the establishment;
3. maintaining an intervention score for the individual during the monitoring; and
4. processing a response action based on the intervention score.

In Example 2, the subject matter of Example 1, optionally generates a packet of information based on detected fraud associated with the intervention score, the packet of information comprises: an identity identifier for the identity, captured video of the individual within the establishment, captured audio of the individual within the establishment, transaction information associated with the various transactions, factors processed when generating the intervention score, an authentication mechanism processed when obtaining the identity, an account linked to the individual, various wireless identifiers associated with various mobile devices of the individual, and establishment information associated with the establishment.

In Example 3, the subject matter of any of the above described examples, generating may further include associating a profile for the individual with the packet of information and a fraud profile with the individual, the fraud profile at least comprising biometric hash value calculated from biometric features of the individual as derived from the video.

In Example 4, the subject matter of Example 3, optionally includes sending the profile and the fraud profile to one or more financial systems associated with one or more financial institutions based on rules.

In Example 5, the subject matter of Example 3 may further include sending a redacted packet of information to one or more governmental systems of one or more non-governmental systems, wherein the redacted packet of information comprising requirements needed to obtain a full version of the packet of information.

In Example 6, the subject matter any of the above described examples, obtaining may further include identifying the individual and linking to the identity based on: a biometric authentication, a mobile application of a mobile device operated by the individual, or a link associated with at least one of the transactions.

In Example 7, the subject matter any of the above described examples, monitoring may further include monitoring terminals performing the transaction and monitoring video captured by one or more cameras within the establishment for the actions and behaviors.

In Example 8, the subject matter any of the above described examples, monitoring may further include tracking the actions and the behaviors as: physiological stress indicators, biometric identifiers, behavioral analysis of movements of the individual throughout the establishment from frames of the video.

In Example 9, the subject matter any of the above described examples, tracking may further include tracking audio keywords spoken by the individual within the establishment as detected by one or more microphones.

In Example 10, the subject matter any of the above described examples, maintaining may further include updating real-time scores associated with a perceived state of the individual and providing a current score available at any point in time while the individual is within the establishment as the intervention score.

In Example 11, the subject matter any of the above described examples, updating may further include generating the real-time scores based on one or more of: a non-linear weighted sum of indicators associated with the actions and the behaviors, a threshold set for each indicator, pairs of indicators given a greater weight when present together, and output from a trained machine-learning algorithm trained for detecting from the indicators threats, fraud, and impersonation.

Example 12, according to the present disclosure, the second aspect is provided a method, comprising:
1. linking a user identifier with a user detected within an establishment;
2. tracking and monitoring the user within the establishment using the user identifier;
3. generating scores to associate with the user identifier based on various transactions, actions, and behaviors of the user determined from the tracking;
4. comparing the scores to threshold values; and
5. automatically processing at least one response action based on the comparing.

In Example 13, the subject matter of Example 12, may maintain one or more logs associated with a period of time during which the user remains within the establishment.

In Example 14, maintaining may further include generating a suspicious activity report from the one or more logs based on at least one particular score and at least one particular threshold value.

In Example 15, the subject matter of Example 12, may further include monitoring transaction information for the transactions and monitoring the actions and behaviors from video captured of the user within the establishment.

In Example 16, the subject matter of Example 15, may automatically process further includes causing, by processing the at least one response action, increased identification needed from the user above an initial identification required for at least transaction performed by the user within the establishment or subsequent transactions performed by the user.

In Example 17, the subject matter of Example 15, may automatically process further includes causing, by processing the at least one response action, flagging of at least one transaction for review and delaying the at least one transaction from continued processing within the establishment.

In Example 18, the subject matter of Example 15, may automatically process further includes causing, by processing the at least one response action, flagging of an account associated with the user at the establishment for a review.

Example 19, according to the present disclosure, the third aspect is provided a system, comprising:
1. cameras;
2. terminals; and
3. a server comprising:
   i. a processor;
   ii. non-transitory computer-readable storage medium comprising executable instructions:
   iii. the executable instructions when executed by the processor from the non-transitory computer-readable storage medium cause the processor to perform processing comprising:
      1. identifying a user within an establishment;
      2. monitoring various transactions based on transaction information provided by the terminals;
      3. monitoring actions and behaviors of the user from video captured by the cameras of the user within the establishment;
      4. generating a current state score for the user based on the monitoring of the transaction information, the actions, and the behaviors; and
      5. processing at least one response action based on the current state score and intervention rules.

In Example 20, the subject matter of Example 19, may with the executable instructions when executed by the processor from the non-transitory computer-readable storage medium further cause the processor to perform additional processing comprising:
1. maintaining a plurality logs of various levels of detail for a period of time that the user was in the establishment;
2. generating custom aggregations from the plurality of logs; and
3. sending the custom aggregations to a plurality of external systems.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A method, comprising:
obtaining an identity [210] for an individual within an establishment;
monitoring various transactions, actions, and behaviors associated with the individual within the establishment [220];
maintaining an intervention score for the individual during the monitoring [230]; and
processing a response action based on the intervention score [240].

2. The method of claim 1 further comprising, generating a packet of information based on detected fraud associated with the intervention score, the packet of information comprising: an identity identifier for the identity, captured video of the individual within the establishment, captured audio of the individual within the establishment, transaction information associated with the various transactions, factors processed when generating the intervention score, an authentication mechanism processed when obtaining the identity, an account linked to the individual, various wireless identifiers associated with various mobile devices of the individual, and establishment information associated with the establishment [250].

3. A method according to any preceding claim, wherein generating further includes associating a profile for the individual with the packet of information and a fraud profile with the individual, the fraud profile at least comprising biometric hash value calculated from biometric features of the individual as derived from the video [251].

4. A method according to any preceding claim, wherein associating further includes sending the profile and the fraud profile to one or more financial systems associated with one or more financial institutions based on rules [252].

5. The method of claim 2, wherein generating further includes sending a redacted packet of information to one or more governmental systems of one or more non-governmental systems, wherein the redacted packet of information comprising requirements needed to obtain a full version of the packet of information [253].

6. The method of claim 1, wherein obtaining further includes identifying the individual and linking to the identity based on: a biometric authentication, a mobile application of a mobile device operated by the individual, or a link associated with at least one of the transactions [211].

7. The method of claim 1, wherein monitoring further includes monitoring terminals performing the transaction and monitoring video captured by one or more cameras within the establishment for the actions and behaviors [221].

8. The method of claim 7, wherein monitoring further includes tracking the actions and the behaviors as: physiological stress indicators, biometric identifiers, behavioral analysis of movements of the individual throughout the establishment from frames of the video [222].

9. The method of claim 8, wherein tracking further includes tracking audio keywords spoken by the individual within the establishment as detected by one or more microphones [223].

10. The method of claim 1, wherein maintaining further includes updating real-time scores associated with a perceived state of the individual and providing a current score available at any point in time while the individual is within the establishment as the intervention score [231].

11. The method of claim 10, wherein updating further includes generating the real-time scores based on one or more of: a non-linear weighted sum of indicators associated with the actions and the behaviors, a threshold set for each indicator, pairs of indicators given a greater weight when present together, and output from a trained machine-learning algorithm trained for detecting from the indicators threats, fraud, and impersonation [232].

12. A system, comprising:
Cameras [406];
Terminals [405]; and
a server [401] comprising:
a processor [402];
non-transitory computer-readable storage medium comprising executable instructions [403]:
the executable instructions [404] when executed by the processor from the non-transitory computer-readable storage medium cause the processor to perform processing comprising:
identifying a user within an establishment;
monitoring various transactions based on transaction information provided by the terminals;
monitoring actions and behaviors of the user from video captured by the cameras of the user within the establishment;
generating a current state score for the user based on the monitoring of the transaction information, the actions, and the behaviors; and
processing at least one response action based on the current state score and intervention rules.

13. The system of claim 12, wherein the executable instructions when executed by the processor from the non-transitory computer-readable storage medium further cause the processor to perform additional processing comprising:
maintaining a plurality logs of various levels of detail for a period of time that the user was in the establishment;
generating custom aggregations from the plurality of logs; and
sending the custom aggregations to a plurality of external systems.
